# EUROPEAN PATENT SPECIFICATION

(11) **EP 2 722 911 B1**
(45) Date of publication and mention of the grant of the patent: **13.03.2019**
(21) Application number: 12800365.4
(22) Date of filing: 18.06.2012
(51) Int. Cl.: H01M 2/20, H01M 2/10, H01M 2/34, H01H 85/06, H01M 10/052

(54) **SOLDERING CONNECTOR, BATTERY MODULE HAVING THE SAME AND BATTERY PACK COMPRISING THE BATTERY MODULE.**
LÖTVERBINDER, BATTERIEMODUL DAMIT UND BATTERIEPACK UMFASSEND DAS BATTERIEMODUL.
CONNECTEUR À SOUDER, MODULE DE BATTERIE LE COMPRENANT ET BLOC-BATTERIE COMPRENANT LE MODULE DE BATTERIE.

(30) Priority: 17.06.2011 KR 20110059254; 18.06.2012 KR 20120065094
(43) Date of publication of application: 23.04.2014
(73) Proprietor: LG Chem, Ltd., Seoul 07336 (KR)
(72) Inventor: YANG, Jung-Hoon, Daejeon 306-758 (KR); CHOI, Seung-Don, Daejeon 305-761 (KR); YUN, Nan-Ji, Daejeon 305-340 (KR); KWON, Dae-Hong, Daejeon 302-740 (KR); JEON, Ji-Hoon, Daejeon 305-761 (KR); KANG, Jin-A, Daejeon 302-781 (KR)
(74) Representative: Hoffmann Eitle
(86) International application number: PCT/KR2012/004810
(87) International publication number: WO 2012/173451

(56) References cited:
- WO-A1-2009/022758
- CN-A- 1 562 553
- JP-A- H1 177 368
- JP-A- 2004 063 251
- KR-A- 20060 019 773
- KR-B1- 100 778 439
- KR-B1- 100 984 576
- US-A- 4 778 733
- US-A1- 2009 159 311
- US-A1- 2011 039 147
- US-B1- 6 296 722
- US-B2- 6 767 411

## Description

### TECHNICAL FIELD

The present invention relates to a secondary battery technology, and more particularly, to a battery module comprising a soldering connector which improves the safety of using a secondary battery and a battery pack comprising the battery module.

### BACKGROUND ART

With the increase in the use of portable electronic products such as video cameras, mobile phones, portable PCs, or the like, a secondary battery is commonly used as a main power source, and thus the importance of the secondary battery is growing.

Unlike a primary battery incapable of recharging, extensive research is undertaken regarding a secondary battery capable of charging and discharging so that they may be used in digital cameras, cellular phones, laptop computers, power tools, electric bicycles, electric vehicles, hybrid vehicles, large-capacity power storage apparatuses, or the like that are fast developing in the high-tech industry.

Particularly, since a lithium secondary battery has a higher energy density per unit weight and is capable of charging quickly compared to other secondary batteries such as lead accumulators, NiCd batteries, NiMH batteries, Li-Zinc batteries, or the like, the use of a lithium secondary battery is increasing.

A lithium secondary battery has an operating voltage of 3.6 V or more, and used as a power source of portable electric apparatuses, or a plurality of lithium secondary batteries is connected in series or in parallel to be used in high-power electric vehicles, hybrid vehicles, power tools, electric bicycles, power storage apparatuses, UPS, etc.

Also, since a lithium secondary battery has an operating voltage three times higher than those of NiCd batteries or NiMH batteries and has excellent energy density characteristics per unit weight, the use of a lithium secondary battery is widely expanding.

Depending on the type of an electrolyte, a lithium secondary battery is categorized into a lithium ion battery using a liquid electrolyte and a lithium ion polymer battery using a polymer solid electrolyte. The lithium ion polymer battery is also divided into two types of batteries depending on the type of the polymer solid electrolyte: an all-solid lithium ion polymer battery containing no electrolyte solution and a lithium ion polymer battery containing an electrolyte solution and using a gel type polymer electrolyte.

Generally, a lithium ion battery using a liquid electrolyte is received in a cylindrical or prismatic metal can-shaped container and hermetically sealed for use. However, since a can-typed secondary battery using a metal can-shaped container is fixed in the shape thereof, electronic products having the can type secondary battery as a power source is limited in design, and has difficulty reducing its volume. Accordingly, a pouch type lithium secondary battery fabricated by receiving an electrode assembly and an electrolyte in a pouch packing made of a film, followed by sealing has been developed and in use.

However, a potential for explosion hazard may exist when a lithium secondary battery overheats, so ensuring the safety of a secondary battery is essential. The overheating of a lithium secondary battery is caused by various factors. One of the factors is the presence of an over-current in a lithium secondary battery. That is, if an over-current flows through a lithium secondary battery, heat is generated by Joule heating, and thus an internal temperature of the battery is quickly increased. Such an increase in temperature causes decomposition reaction of an electrolyte which brings about thermal running, causing the battery to inevitably explode. The over-current occurs when a sharp metal object penetrates a lithium secondary battery, or if an insulator between a cathode plate and an anode plate is destroyed by contraction of a separator being interposed between the cathode and anode plates, or if a rush current is applied to the battery due to an abnormal charge circuit or a load connected to the external.

In order to protect a lithium secondary battery from abnormalities such as an over-current, the battery is generally coupled to a protection circuit before use, and the protection circuit includes a fuse element which irreversibly disconnects a line where a charge or discharge current flows. For example, US 2009/022758 A1 describes a battery system that includes multiple battery packs, each with a plurality of cells that are electrically connected with a severable feature, whereby the electrical connection is severed locally in response to an impact force that is in excess of a predetermined magnitude and/or an over-current/over-temperature condition. Severable materials described therein include Sn, Au-20% Sn, lead-5% Sn, and Ag-Sn.

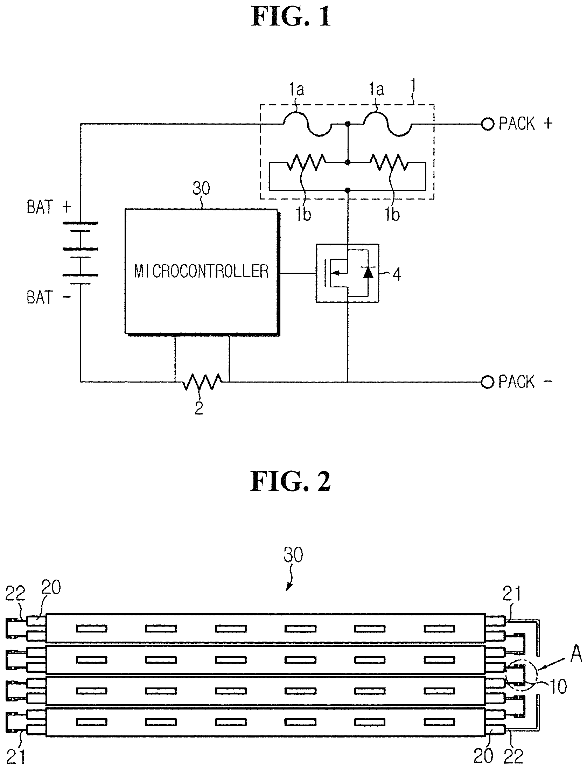

FIG. 1 is a circuit diagram showing the deposition structure and the operation mechanism of a fuse element in the configuration of a protection circuit coupled with a battery pack having a lithium secondary battery.

As shown in FIG. 1, the protection circuit includes a fuse element 1 for protecting a battery pack when an over-current occurs, a sense resistor 2 for sensing an over-current, a microcontroller 3 for monitoring the generation of an over-current and operating the fuse element 1 when an over-current occurs, and a switch 4 for switching the inflow of an operation current into the fuse element 1.

The fuse element 1 is installed in a main line connected to the outermost terminal of the battery pack. The main line is a wire in which a charge current or discharge current flows. FIG. 1 shows that the fuse element 1 is installed in a high-voltage line (Pack+).

The fuse element 1 has three terminals, among these, two terminals are in contact with the main line in which a charge or discharge current flows, while the remaining one terminal is in contact with the switch 4. Also, the fuse element 1 includes a fuse 1a serially connected with the main line and melted at a predetermined temperature and a resistor 1b which applies heat to the fuse 1a.

The microcontroller 3 monitors whether an over-current occurs or not by periodically detecting the voltage of both ends of the sense resistor 2, and when the occurrence of an over-current is determined, the microcontroller 3 turns on the switch 4. Then, the current which flows in the main line is bypassed to the fuse element 1 and applied to the resistor 1b. Thereby, Joule heat generated from the resistor 1b is conducted to the fuse 1a to increase a temperature of the fuse 1a, and when the temperature of the fuse 1a reaches the melting temperature, the fuse 1a melts, and thus the main line is irreversibly disconnected. When the main line is disconnected, an over-current no longer flows, thereby overcoming the problems associated with the over-current.

However, there are many problems in the conventional technology described above. That is, if there is a problem with the microcontroller 3, the switch 4 may not turn on even when an over-current occurs. In this case, since a current does not flow into the resistor 1b of the fuse element 1, there is a problem in that the fuse element 1 will not operate. In addition, a space for disposing the fuse element 1 is separately required in the protection circuit, and a program algorithm for controlling the operation of the fuse element 1 has to be loaded in the microcontroller 3. As a result, the space efficiency of the protection circuit deteriorates and the load of the microcontroller 3 increases.

### DISCLOSURE

### Technical Problem

The present invention is designed to solve the problems of the prior art, and therefore it is an object of the present invention to provide a battery module comprising at least a pair of unit cells electrically connected by a soldering connector that can easily interrupt an electrical connection between the unit cells when a temperature increases due to abnormalities, thereby ensuring the safety of the batteries. It is also an object of the present invention to provide a battery pack comprising the battery module.

### Technical Solution

In order to achieve the above-mentioned objects, in accordance with one aspect of the present invention, there is provided, a battery module comprising a plurality of unit cells which are connected to each other in series, in parallel, or both; and a soldering connector electrically connecting at least one pair of unit cells among the plurality of unit cells.The soldering connector comprises a lead-free alloy containing tin (Sn) and copper (Cu). The content of tin is 92 wt% to 96 wt% and the content of copper is 4 wt% to 8 wt%. The soldering connector has a melting point of 100 °C to 250 °C.

Optionally, the soldering connector may further include at least one additional metal selected from nickel (Ni), zinc (Zn) and silver (Ag).

Preferably, the content of the additional metal may be 0.01 wt% or more.

Each unit cell may have a pair of electrode leads including an anode lead made of a copper material or a copper coated with nickel; and a cathode lead made of an aluminum material.

According to the present invention, any one of the electrode leads of a first unit cell selected from the plurality of unit cells and any one of the electrode leads of a second unit cell adjacent to the first unit cell may be directly connected to each other, or connected through the soldering connector.

The coupling between the soldering connector and any one of the electrode leads, and the coupling between the electrode leads may be performed by using ultrasonic welding or laser welding.

Meanwhile, in order to achieve the objects described in accordance with still another aspect of the present invention, there is provided a battery pack comprising a plurality of battery modules which are connected to each other in series, in parallel or both.

The battery pack may be used as a power source of power tools; vehicles powered by electricity including electric vehicles (EV), hybrid electric vehicles (HEV), and plug-in hybrid electric vehicles (PHEV); electric trucks; or power storage apparatuses.

### Advantageous Effects

According to the present invention, when a secondary battery overheats due to the malfunction thereof, an electrical connection between unit cells comprised in a battery module rapidly disconnects under a relatively low temperature and current range, thereby ensuring the safety of the secondary battery.

### DESCRIPTION OF DRAWINGS

Other objects and aspects of the present invention will become apparent from the following descriptions of the embodiments with reference to the accompanying drawings in which:
FIG. 1 is a circuit diagram showing the disposition structure and the operation mechanism of a fuse element in the configuration of a protection circuit in which a battery module is coupled thereto;
FIG. 2 is a plain view showing a battery cell using a soldering connector according to an embodiment of the present invention;
FIG. 3 is a partially magnified view showing area A of FIG. 2;
FIG. 4 is a partially magnified view showing a modified embodiment of the soldering connector of FIG. 3;
FIG. 5 is a perspective view showing a battery module according to an embodiment of the present invention;
FIG. 6 is a perspective view showing a battery pack according to an embodiment of the present invention;
FIG. 7 is a graph showing current measurement values over time, obtained from a short-circuit test according to the present invention;
FIG. 8 is a graph showing temperature measurement values over time, obtained from a short-circuit test according to the present invention; and
FIG. 9 is a graph showing tensile strength characteristics depending on a copper content, obtained from tensile strength evaluation test according to the present invention.

### BEST MODE

Hereinafter, preferred embodiments of the present invention will be described in detail with reference to the accompanying drawings.

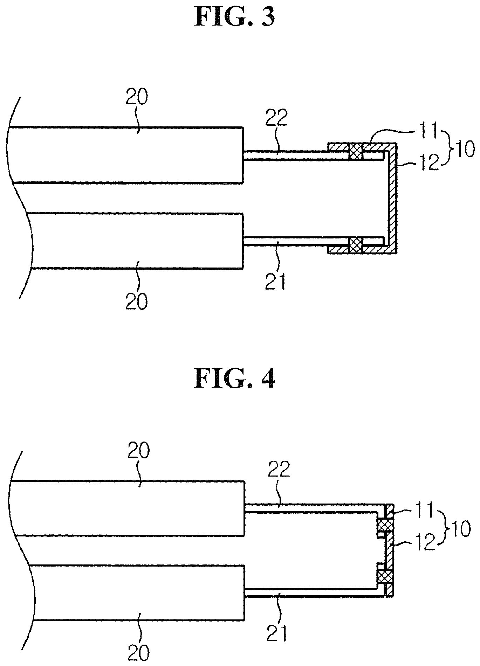

FIG. 2 is a plain view showing a battery cell using a soldering connector as required by the present invention, FIG. 3 is a partially magnified view showing area A of FIG. 2, and FIG. 4 is a partially magnified view showing a modified embodiment of the soldering connector of FIG. 3.

Referring to FIG. 2, a soldering connector 10 as required by the present invention is connected between electrode leads 21, 22 provided in each of at least one pair of unit cells 20 among a plurality of unit cells 20 electrically connected to each other to be comprised in a battery cell 30. In this case, the soldering connector 10 may be coupled to the electrode leads 21, 22 by using various known methods including ultrasonic welding, laser welding, or the like. FIG 2. shows only an embodiment in which all electrical connections between the electrode leads 21, 22 are made by using the soldering connector 10, but the present invention is not limited thereto. That is, only a part of the electrode leads 21, 22 may be coupled by using the soldering connector 10 and the remaining may be directly interconnected therebetween.

In the electrode leads 21, 22, a cathode lead 21 may be made of aluminum (Al) and an anode lead 22 may be made of copper (Cu) or nickel-coated copper, while the soldering connector 10 is made of a material having a melting point lower than those of the electrode leads 21, 22.

Accordingly, the soldering connector 10 may rapidly melt when an over-current flows in the battery cell 30 in which the plurality of unit cells 10 are connected to each other in series, in parallel, or both, thereby interrupting a part or the entire current.

Particularly, the soldering connector 10 is made of eco-friendly alloy containing tin (Sn) and copper (Cu), instead of lead (Pb) which is noxious on the environment and the human body. A melting point of the soldering connector 10 is 100 to 250 °C depending on a content ratio of the components.

The melting point range of the soldering connector 10 is set in consideration of an over-current level intended to interrupt. If the melting point of the soldering connector 10 is less than 100 °C, the soldering connector 10 may melt despite a normal current flow. For example, if a secondary battery applying the soldering connector 10 thereto is used in vehicles, the soldering connector 10 may melt by a rapid charge and discharge current. Also, if a melting point of the soldering connector 10 is higher than 250 °C, the soldering connector 10 may not melt as quickly despite an over-current, making it difficult to efficiently interrupt the generated over-current.

Among the components of the soldering connecter 10, tin affects a melting point and tensile strength characteristics of the soldering connector 10. In order for the soldering connector 10 to have a melting point in the range of 100 to 250 °C and also have fine tensile strength characteristics, the content of tin is adjusted in the range of 92 to 96 wt%. Copper functions to improve the electric conductivity of the soldering connector 10, so the content of copper is adjusted in a range of 4 to 8 wt%. The wt% which is used herein is a unit based on the total weight of the materials comprised in the soldering connector 10 and has the same meaning below.

As mentioned above, by adjusting the contents of tin and copper in a range such as above, not only is the fine tensile strength of the soldering connector 10 achieved but also the increase of resistance by the soldering connector 10 may be restrained within a low level of a number of %.

In order to have even further improved properties, the soldering connector 10 may include a metal having excellent electric conductivity such as nickel (Ni), silver (Ag), zinc (Zn) or the like as an additional alloy component, beside tin and copper. The content of the additional alloy component is preferably 0.01 wt% or more based on the total weight of the materials comprised in the soldering connector 10.

Meanwhile, referring to FIGS. 3 and 4, the soldering connector 10 has various shapes including ' 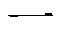 ' or ' 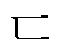 '.

In other words, since a pair of coupling portions 11 coupled with each of the electrode leads 21, 22 is connected through a connecting portion 12 and the connection part therebetween is bent, the overall shape of the soldering connector 10 may be approximately ' 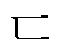 ' shape (see FIG. 3).

Also, since each of the coupling portions 11 is connected to the connecting portion 12 by the extension in a straight line, the overall shape of the soldering connector 10 may be approximately ' 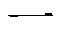 ' shape. In this case, the ends of the electrode leads 21, 22 are bent approximately vertically in the extension direction of the electrode leads 21, 22 and the ends may be coupled to the coupling portion 11 of the soldering connector 10.

The shapes of the soldering connector 10 of FIGS. 3 and 4 are just for illustration, and the shape of the soldering connecter 10 is not limited thereto. That is, the shape of the soldering connector 10 is variable depending on a positional relationship with the electrode leads 21, 22, and the shape of the electrode leads 21, 22.

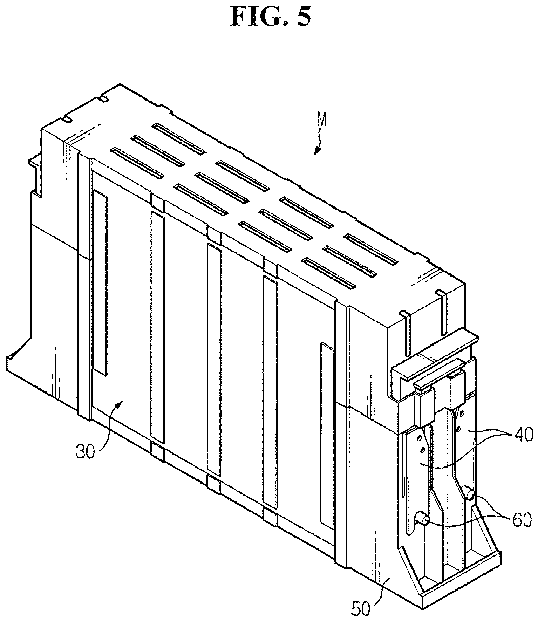

FIG. 5 is a perspective view showing a battery module according to an embodiment of the present invention.

Referring to FIG. 5, a battery module M according to an embodiment of the present invention includes a battery cell 30, a bus bar 40, an exterior case 50, and an external terminal 60.

In the battery cell 30, a plurality of unit cells 20 is connected to each other, as described above, by applying a soldering connector 10 according to an embodiment of the present invention.

The bus bar 40 is connected to each of the electrode leads 21, 22 located at the outermost shell of both sides of the battery cell 30, and thus the bus bar 40 is electrically connected to the battery cell 30.

The battery cell 30 connected to the bus bar 40 is received inside the exterior case 50 to place the bus bar 40 at the outer side of the exterior case 50, and the bus bar 40 is connected to the external terminal 60 installed at the exterior case 50 to make electrical connection between the battery cell 30 and the external terminal 60.

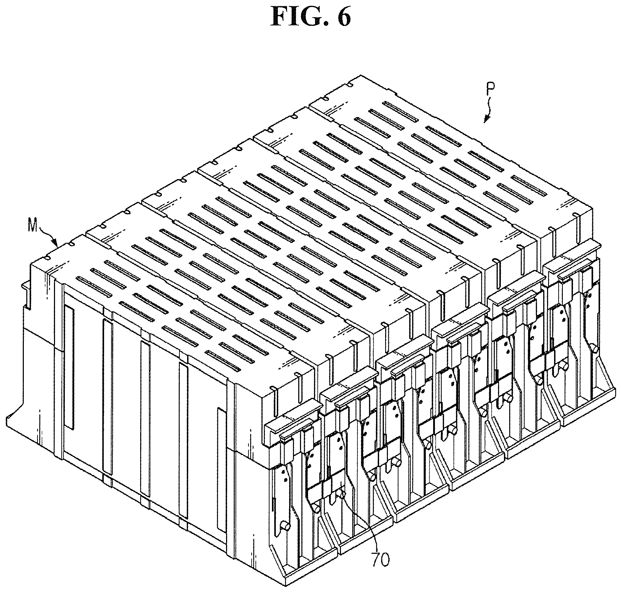

FIG. 6 is a perspective view showing a battery pack according to an embodiment of the present invention.

Referring to FIG. 6, a battery pack P according to an embodiment of the present invention is obtained by connecting a plurality of battery modules M by means of a connecting bar 70 in series, in parallel or both.

Such a battery pack P can be variously used, for example, as a power source of power tools; vehicles powered by electricity including electric vehicles (EV), hybrid electric vehicles (HEV), and plug-in hybrid electric vehicles (PHEV); electric trucks; or power storage apparatuses.

As described above, the soldering connector 10 as required by the present invention is made of a material having a melting point lower than those of the electrode leads 21, 22, so that if the battery module M and the battery pack P are used, the occurrence of an over-current caused by overcharge or short-circuit makes the soldering connector rapidly break, thereby interrupting a part or the entire current. Therefore, the soldering connector 10 ensures the safety of a secondary battery such as the battery module M, the battery pack P, etc.

In addition, the soldering connector 10 has an excellent weld characteristic with the electrode leads 21, 22 and may restrain the increase of resistance in a secondary battery within a low level of a number of %.

Hereinafter, the present invention is explained in more detail using the Examples. However, the following Examples may be modified in various ways, and the present invention should not be interpreted as being limited thereto.

### Example 1

A metal alloy constituting a soldering connector were purchased from Ecojoin Co., Ltd and used. The metal alloy includes 96 % tin and 4% copper.

Eight unit cells for PHEV/EV batteries were each provided and No. 1 to 8 unit cells were serially connected to fabricate a battery module. At this time, laser welding was performed so as to electrically interconnect an anode lead and a cathode lead adjacent thereto. In order to connect a cathode lead of No. 4 unit cell and an anode lead of No. 5 unit cell adjacent to the No. 4 unit cell, laser welding was performed by means of a soldering connector (' 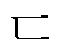 ' shape connector having a length of 40 mm) comprising the purchased alloys. The laser welding was carried out under the condition that an energy of 3.5 kV is applied to the anode electrode part, an energy of 2.8 kV, in the cathode electrode part.

### Example 2

The procedure of Example 1 was repeated, except that the soldering connecter comprising the purchased alloys was further used to connect a cathode lead of No. 2 unit cell and an anode lead of No. 3 unit cell adjacent to the No. 2 unit cell, to fabricate a battery module.

### Example 3

The procedure of Example 2 was repeated, except that the soldering connecter comprising the purchased alloys was further used to connect a cathode lead of No. 6 unit cell and an anode lead of No. 7 unit cell adjacent to the No. 6 unit cell, to fabricate a battery module.

### Reference Examples 4 to 6

The procedure of Examples 1 to 3 were repeated, except that a metal alloy (Ecojoin co., Ltd.) having 99.4 % tin, 0.5 % copper, and 0.1 % nickel was used, to fabricate a battery module.

### Comparative Example

The procedure of Example 1 was repeated, except that a soldering connector comprising the purchased metal alloys was not used at all, to fabricate a battery module.

### Experimental Example 1: Overcharging Test of Battery Module

In order to evaluate the safety of a battery module fabricated according to the present invention and having a soldering connector with a low melting point and high conductivity, the following experiment was performed.

Battery modules fabricated in Examples 1 to 3 and Reference Examples 4 to 6 and Comparative Example were used, and each battery module was overcharged under the condition of 10V/1A. The status of each battery module is shown in the following Table 1.

According to the results of the test, when the battery module of Comparative Example was overcharged, the temperature of a battery including the module was dramatically increased, thereby resulting in the ignition and explosion of the battery. However, battery modules according to Examples of the present invention, using a soldering connector having a low melting point and high conductivity, exhibited their safety (see Table 1). Accordingly, it can be understood that the battery module according to the present invention comprises the soldering connector to interrupt the electrical connection between the electrode leads even though a battery is heated by malfunction thereof, thereby interrupting the flow of electricity in a battery module level and rapidly generating a disconnection condition in a relatively low temperature and low current range, from which the electrical and thermal safety of the battery is achieved.

**Table 1**

| | Ignition | Explosion | Smoke |
|---|---|---|---|
| Example 1 | X | x | x |
| Example 2 | X | x | x |
| Example 3 | X | x | x |
| Ref. Example 4 | X | x | x |
| Ref. Example 5 | X | x | x |
| Ref. Example 6 | X | x | x |
| Comparative Example | ○ | ○ | ○ |

### Experimental Example 2: Short-circuit Test of Battery Module

In order to test the safety of battery modules using a soldering connector according to the present invention in the electrode leads thereof, a short-circuit test was performed under an over-current circumstance.

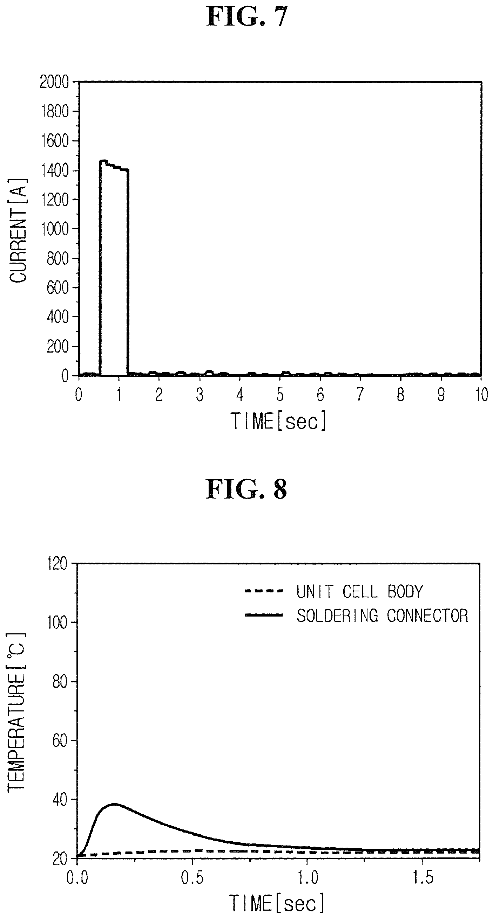

Battery modules of Examples 1 and 2 were fully charged to be SOC 100%, and a cathode and an anode were connected to each other to form short-circuit condition. After forming the short-circuit condition, a short-circuit current was measured at a predetermined time interval, and a temperature change over time was observed at the soldering connector and at the center of unit cells' body. The monitoring results with respect to a short-circuit current and temperature are shown in FIGS. 7 and 8.

As shown in FIG. 7, the short-circuit current of both battery modules of Examples 1 and 2 dramatically increased to 1465A, a breakage was generated in the soldering connector within one second after a short-circuit condition was formed, and thus the short-circuit current decreased to zero. The breakage in the soldering connector means that the temperature of the alloy comprised in the soldering connector was rapidly raised until the melting temperature thereof.

Also, as shown in FIG. 8, it was confirmed that even though both battery modules of Examples 1 and 2 had dramatically increased in their short-circuit current, the temperature of unit cells constituting the battery module did not substantially change, and the temperature of the soldering connector increased to about 18 °C after an over-current occurred and then returned to room temperature within one minute.

A short-circuit test was identically performed with respect to the battery module of the Comparative Example. Based on the test results, it was confirmed that the temperature of unit cells drastically increased to 100 °C or higher within two minutes, and the sealing portion of a pouch comprising unit cells was opened to emit gas. After gas emission, the temperature of the unit cells was maintained to approximately 60 °C.

Based on the results of such test for the battery modules of Examples 1 and 2, it can be understood that as soon as a short-circuit current occurs, an over-current was interrupted by the breakage of the soldering connector, and a temperature locally increases from 100 to 250 °C only at the breakage portion of the soldering connector, so that the generation of an over-current does not substantially affect the unit cells constituting the battery module.

Therefore, it was confirmed that if the soldering connector according to the present invention is applied to a secondary battery such as a battery module or the like, the safety of the secondary battery can be improved under an over-current circumstance.

### Experimental Example 3: Evaluation Test of Tensile Strength Characteristics of Secondary Battery Components

In order to evaluate the tensile strength characteristics of the soldering connector according to an embodiment of the present invention, the following test was performed.

First, weld strength between the soldering connector according to an embodiment of the present invention and a metal plate constituting electrode leads was measured.

### Sample 1

A copper substrate with a width of 1 cm, a length of 4cm, and a thickness of 0.5 mm, and a soldering connector comprising an alloy with a width of 1 cm, a length of 4cm, and a thickness of 0.5 mm and having 96 weight % of tin and 4 weight % of copper were overlapped in 3 mm, and then line welding was performed with laser along the center of the overlapped portion, to fabricate Sample 1.

### Sample 2

A copper substrate with a width of 1 cm, a length of 4cm, and a thickness of 0.5 mm, and an aluminum substrate with a width of 1 cm, a length of 4cm, and a thickness of 0.2 mm were overlapped in 3 mm, and then, line welding was performed with laser along the center of the overlapped portion, like Sample 1, to fabricate Sample 2.

After Samples 1 and 2 were prepared, the tensile strength of each sample was measured by means of Universal Testing Machine (UTM). As a result, the tensile strength of Sample 1 was 233.2 N, and the tensile strength of Sample 2 was 150.9 N, and it was recognized that Sample 1 has approximately 54.5 % higher tensile strength than that of Sample 2. Accordingly, it was confirmed that the alloy used in the soldering connector according to the present invention has excellent weld characteristic with electrode leads.

Next, for the soldering connector including tin and copper, the change of tensile strength characteristics was evaluated depending on the change of copper content. To achieve this, six samples in which cooper content was adjusted to 4w%, 6w%, 8w%, 10w%, 15w% and 20wt%, respectively, were prepared and named Samples 3 to 8.

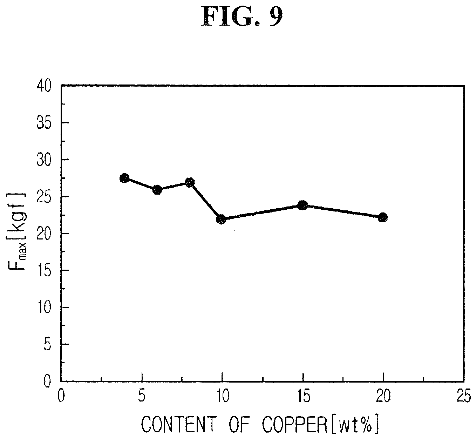

The Samples 3 to 8 were prepared to have the same thickness, width, and length, that is, a thickness of 0.5mm, a width of 1cm and a length of 5cm, and the tensile strength of each sample was measured by means of UTM. The measuring results were shown in FIG. 9.

As shown in FIG. 9, it was recognized that the soldering connector comprising the alloy having copper in a content of 4 to 8 wt% exhibited the highest tensile strength. However, through the tensile strength measurement test of Samples 1 and 2, it was confirmed that the soldering connector having 4 wt% of copper content had excellent weld characteristic with the electrode leads. Accordingly, it is obvious that the soldering connector having 4 to 8 wt% of copper content also has excellent weld characteristic with the electrode leads. Also, if the content of copper is less than 4 wt%, the content of tin having a good tensile strength characteristic relatively increases. Therefore, even without a direct measurement, it is obvious that the tensile strength level of a case in which the content of copper is less than 4 wt% is similar to that of the case in which the content of copper is from 4 to 8 wt%.

Meanwhile, it was confirmed that if the content of copper increases by 10 to 20 wt%, a tensile strength decreases a little compared to the case in which the content of copper is in the range of 4 to 8 wt%.

### INDUSTRIAL APPLICABILITY

The present invention relates to a battery module and a battery pack containing same and is thus industrially applicable.

## Claims

1. A battery module comprising:
a plurality of unit cells which are connected to each other in series, in parallel, or both; and
a soldering connector electrically connecting at least one pair of unit cells among the plurality of unit cells, which comprises a lead-free alloy containing Sn and Cu, **characterized in that** the content of tin is 92 wt% to 96 wt% and the content of copper is 4 wt% to 8 wt%, and that the soldering connector has a melting point of 100°C to 250°C.

2. The battery module according to claim 1, wherein each of the unit cells includes a pair of electrode leads.

3. The battery module according to claim 2, wherein the pair of electrode leads includes an anode lead made of a copper material or a copper coated with nickel; and a cathode lead made of an aluminum material.

4. The battery module according to claim 2, wherein any one of the electrode leads of a first unit cell selected from the plurality of unit cells and any one of the electrode leads of a second unit cell adjacent to the first unit cell is directly connected to each other, or connected through the soldering connector.

5. The battery module according to claim 1, wherein the soldering connector further comprises at least one additional metal selected from nickel (Ni), zinc (Zn) and silver (Ag).

6. The battery module according to claim 5, wherein the content of the additional metals is 0.01 wt% or more based on the total weight of materials comprised in the soldering connector.

7. The battery module according to claim 4, wherein the coupling between the soldering connector and any one of the electrode leads and the coupling between the electrode leads are performed by using ultrasonic welding or laser welding.

8. A battery pack comprising the battery modules according to any one of claims 1 to 7 in plurality, wherein the plurality of battery modules are connected to each other in series, in parallel, or both.

9. The battery pack according to claim 8, which is used as a power source of power tools; vehicles powered by electricity including electric vehicles (EV), hybrid electric vehicles (HEV) and plug-in hybrid electric vehicles (PHEV); electric trucks; or power storage apparatuses.

## Patentansprüche

1. Batteriemodul, umfassend:
eine Vielzahl von Einheitszellen, die in Reihe, parallel oder beides miteinander verbunden sind; und
ein Lötbindemittel, welches mindestens ein Paar von Elementarzellen der Vielzahl von Elementarzellen elektrisch verbindet, umfassend eine bleifreie Legierung, die Sn und Cu enthält, **dadurch gekennzeichnet, dass** der Zinngehalt 92 Gew.-% bis 96 Gew.-% und der Kupfergehalt 4 Gew.-% bis 8 Gew.-% beträgt und, dass das Lötbindemittel einen Schmelzpunkt von 100°C bis 250°C aufweist.

2. Batteriemodul gemäß Anspruch 1, wobei jede der Einheitszellen ein Paar von Elektrodenleitern enthält.

3. Batteriemodul gemäß Anspruch 2, wobei das Paar von Elektrodenleitern einen Anodenleiter, der aus einem Kupfermaterial oder aus mit Nickel beschichteten Kupfer hergestellt ist; und einen Kathodenleiter aus einem Aluminiummaterial enthält.

4. Batteriemodul gemäß Anspruch 2, wobei einer der Elektrodenleiter einer ersten Einheitszelle, ausgewählt aus der Vielzahl von Einheitszellen, und einer der Elektrodenleiter einer zweiten Einheitszelle, der an die erste Einheitszelle angrenzt, direkt miteinander verbunden sind oder durch das Lötbindemittel miteinander verbunden sind.

5. Batteriemodul gemäß Anspruch 1, wobei das Lötbindemittel ferner mindestens ein zusätzliches Metall umfasst, das aus Nickel (Ni), Zink (Zn) und Silber (Ag) ausgewählt ist.

6. Batteriemodul gemäß Anspruch 5, wobei der Gehalt der zusätzlichen Metalle 0,01 Gew.-% oder mehr beträgt, bezogen auf das Gesamtgewicht der Materialien, die in dem Lötbindemittel enthalten sind.

7. Batteriemodul gemäß Anspruch 4, wobei die Kopplung zwischen dem Lötbindemittel und einem von den Elektrodenleitern und die Kopplung zwischen den Elektrodenleitern unter Verwendung von Ultraschallschweißen oder Laserschweißen erfolgen.

8. Batteriepack, umfassend eine Vielzahl der Batteriemodule gemäß einem der Ansprüche 1 bis 7, wobei die Vielzahl von Batteriemodulen in Reihe, parallel oder beides miteinander verbunden sind.

9. Batteriesatz gemäß Anspruch 8 zur Verwendung als Energiequelle für Elektrowerkzeuge; elektrisch betriebene Fahrzeuge, einschließlich Elektrofahrzeuge (EV), Hybrid-Elektrofahrzeuge (HEV) und Plug-In-Hybrid-Elektrofahrzeuge (PHEV); elektrische Lastwagen; oder Energiespeichergeräte.

## Revendications

1. Module de batterie comprenant :
une pluralité de cellules unitaires qui sont connectées les unes aux autres en série, en parallèle, ou les deux ; et
un connecteur de soudage connectant électriquement au moins une paire de cellules unitaires parmi la pluralité de cellules unitaires, qui comprend un alliage sans plomb contenant Sn et Cu, **caractérisé en ce que** la teneur en étain est de 92 % en poids à 96 % en poids et la teneur en cuivre est de 4 % en poids à 8 % en poids, et **en ce que** le connecteur de soudage a un point de fusion de 100 °C à 250 °C.

2. Module de batterie selon la revendication 1, dans lequel chacune des cellules unitaires inclut une paire de conducteurs d'électrode.

3. Module de batterie selon la revendication 2, dans lequel la paire de conducteurs d'électrode inclut un conducteur d'anode constitué d'un matériau de cuivre ou d'un cuivre revêtu de nickel ; et un conducteur de cathode en matériau aluminium.

4. Module de batterie selon la revendication 2, dans lequel l'un quelconque des conducteurs d'électrode d'une première cellule unitaire choisie parmi la pluralité de cellules unitaires et l'un quelconque des conducteurs d'électrode d'une seconde cellule unitaire adjacente à la première cellule élémentaire sont directement connectés l'un à l'autre, ou connectés via le connecteur de soudage.

5. Module de batterie selon la revendication 1, dans lequel le connecteur de soudage comprend en outre au moins un métal supplémentaire choisi parmi le nickel (Ni), le zinc (Zn) et l'argent (Ag).

6. Module de batterie selon la revendication 5, dans lequel la teneur en métaux supplémentaires est égale ou supérieure à 0,01 % en poids sur la base du poids total des matériaux contenu dans le connecteur de soudage.

7. Module de batterie selon la revendication 4, dans lequel le couplage entre le connecteur de soudage et l'un quelconque des conducteurs d'électrode et le couplage entre les fils d'électrode sont réalisés en utilisant un soudage par ultrasons ou un soudage au laser.

8. Bloc-batterie comprenant les modules de batterie selon l'une quelconque des revendications 1 à 7 en pluralité, dans lequel la pluralité de modules de batterie sont connectés les uns aux autres en série, en parallèle ou les deux.

9. Bloc-batterie selon la revendication 8, qui est utilisé comme source d'énergie pour des outils électriques ; des véhicules fonctionnant à l'électricité, incluant des véhicules électriques (EV), des véhicules électriques hybrides (HEV) et des véhicules électriques hybrides rechargeables (PHEV) ; des camions électriques ; ou des appareils de stockage d'énergie.
